# EUROPÄISCHE PATENTSCHRIFT

(11) **EP 4 245 991 B1**
(45) Veröffentlichungstag und Bekanntmachung des Hinweises auf die Patenterteilung: **08.01.2025**
(21) Anmeldenummer: 22162806.8
(22) Anmeldetag: 17.03.2022
(51) Int. Cl.: F03D 17/00, F03D 7/02

(54) **VERFAHREN ZUM ERKENNEN EINER BLATTFEHLSTELLUNG EINES ROTORBLATTES EINER WINDENERGIEANLAGE**
METHOD FOR DETECTING THE INCORRECT LOCATION OF A ROTOR BLADE OF A WIND POWER FACILITY
PROCÉDÉ DE DÉTECTION D'UN MAUVAIS RÉGLAGE D'UNE PALE DE ROTOR D'UNE ÉOLIENNE

(43) Veröffentlichungstag der Anmeldung: 20.09.2023
(73) Patentinhaber: Wobben Properties GmbH, 26607 Aurich (DE)
(72) Erfinder: Frommann, Johannes, 22083 Hamburg (DE); von Aswege, Enno, 26629 Großefehn (DE); Vollack, Stephan, 26605 Aurich (DE)
(74) Vertreter: Eisenführ Speiser

(56) Entgegenhaltungen:
- CN-A- 110 925 137
- US-A1- 2015 337 802

## Beschreibung

Die Erfindung betrifft ein Verfahren zum Erkennen einer Blattfehlstellung eines Rotorblattes einer Windenergieanlage. Die Erfindung betrifft auch eine Windenergieanlage, die ein solches Verfahren ausführt.

Windenergieanlagen weisen üblicherweise einen Rotor mit drei Rotorblätter auf, die in ihren Blattwinkeln verstellt werden können. Solche Windenergieanlagen arbeiten meist so, dass ihre Rotorblätter in einem Teillastbetrieb, wenn die Windgeschwindigkeit noch unter einer Nennwindgeschwindigkeit liegt, einen optimalen Blattwinkel aufweisen. Im Volllastbetrieb, wenn die Windgeschwindigkeit oberhalb der Nennwindgeschwindigkeit liegt, werden die Blattwinkel mit zunehmendem Wind so verstellt, dass die Rotorblätter aus dem Wind gedreht werden, um ihre mechanische Belastung zu reduzieren. Üblicherweise wird dazu allen drei Rotorblättern ein gleicher Blattwinkel vorgegeben, der auch als gemeinsamer oder kollektiver Blattwinkel bezeichnet werden kann.

Um ungleichmäßig über die Rotorfläche verteilte Lasten und/oder zeitlich veränderliche Lasten auf den Rotorblättern zu berücksichtigen, kann es vorteilhaft sein, die Rotorblätter individuell in ihren Blattwinkeln zu verstellen, was auch als Individual Pitch Control (IPC) oder Einzelblattverstellung bekannt ist. Solche ungleichmäßigen Lasten können dadurch bedingt sein, dass die Windgeschwindigkeit und/oder Windrichtung mit der Höhe variiert.

Auch ein Turmschatteneffekt kann eine Rolle spielen.

So ist typischerweise die Windgeschwindigkeit in Bodennähe geringer und nimmt mit zunehmender Höhe zu. Ein Rotorblatt, das bei seinem Umlauf gerade den tiefsten Punkt erreicht, erfährt somit eine andere Windgeschwindigkeit als ein Rotorblatt am höchsten Punkt. Durch die individuelle Blattwinkelverstellung lassen sich derartige Effekte berücksichtigen und die Lasten verringern bzw. die Leistung weiter maximieren.

Ein Problem, das bei der Blattverstellung auftreten kann, ist, dass ein Rotorblatt hinsichtlich seiner Blattwinkelverstellung feststeht. Das kann mechanische und/oder elektrische Gründe haben.

Bei feststehenden Rotorblättern ist nicht mehr gewährleistet, dass die Rotorblätter optimal zum Wind ausgerichtet sind. Dies kann zu potentiellen Extremlasten führen und im schlimmsten Fall Komponenten der Windenergieanlage beschädigen oder zumindest stark beanspruchen.

Problematisch ist, solche feststehenden Rotorblätter zuverlässig und schnell zu erkennen.

Bei Windenergieanlagen ohne Einzelblattverstellung lässt sich eine solche Blattfehlstellung gut durch eine Abweichung eines tatsächlichen Ist-Wertes von einem vorgegebenen Sollwert erkennen. Bei individuell einstellbaren Blattwinkeln der Rotorblätter ändert sich die Vorgabe des Blattwinkels während eines Umlaufes des Rotorblattes mit dem Rotor kontinuierlich. Es gibt somit keinen festen Sollwert, mit dem die Abweichung verglichen werden könnte. Außerdem liegt es in der Natur der Sache, dass bei einer Einzelblattverstellung die individuellen Blattwinkel von einem gemeinsamen Blattwinkel abweichen. Aus einer Abweichung kann somit nicht ohne weiteres auf eine Fehlstellung abgeleitet werden. Besonders im Falle einer Einzelblattverstellung ist es somit schwierig, Blattfehlstellungen möglichst schnell und zuverlässig zu erkennen. Neben einem klemmenden oder feststehenden Rotorblatt sollten auch solche Fehlstellungen erkannt werden, bei denen der Ist-Wert des Blattwinkels dem Sollwert nicht mehr optimal folgt. Ein Verfahren zum Erkennen einer Blattfehlstellung eines Rotorblattes einer Windenergieanlage ist in US 2015/337802 A1 offenbart.

Aufgabe der Erfindung ist es daher, eines der beschriebenen Probleme zu adressieren.

Insbesondere sollen Blattfehlstellungen bei in ihren Blattwinkeln individuell einstellbaren Rotorblättern schnell und sicher erkannt werden. Zumindest soll zu bisher bekannten Lösungen eine alternative Lösung vorgeschlagen werden.

Gemäß einem Aspekt der Erfindung wird ein Verfahren gemäß Anspruch 1 vorgeschlagen. Somit wird ein Verfahren zum Erkennen einer Blattfehlstellung, insbesondere einer unzulässigen Blattfehlstellung, eines Rotorblattes einer Windenergieanlage mit einem Rotor und wenigstens drei in ihren Blattwinkeln individuell verstellbaren Rotorblättern vorgeschlagen. Für jedes Rotorblatt wird ein Ist-Winkel als Ist-Wert des Blattwinkels erfasst wird, und die Blattfehlstellung in Abhängigkeit von einer Blattwinkelabweichung des Rotorblattes und einem Drehfortschritt des Rotors identifiziert. Die Blattwinkelabweichung beschreibt eine Abweichung des Ist-Winkels von einem Referenzwinkel, und der Drehfortschritt steht repräsentativ für einen Winkel um den sich der Rotor nach einem Startkriterium weitergedreht hat.

Der Drehfortschritt des Rotors ist damit der Winkel den das Rotorblatt durch Drehung des Rotors nach einem Startkriterium zurückgelegt hat, insbesondere steht der Drehfortschritt repräsentativ für eine von dem Rotorblatt überstrichene Rotorfläche, die das Rotorblatt nach dem Startkriterium überstrichen hat. Es geht also um die Drehung des Rotors, die aber für jedes Rotorblatt einzeln betrachtet werden kann. Es kann also die Position des jeweiligen Rotorblattes betrachtet werden, wie sie sich durch die Drehung des Rotors ändert. Mit der Drehung des Rotors überstreicht jedes Rotorblatt einen Teil der Rotorfläche und der zurückgelegte Winkel des Rotors ist somit repräsentativ für die überstrichene Rotorfläche, also den überstrichenen Teil.

Durch die Berücksichtigung des Drehfortschritts zusätzlich zum Blattwinkel kann dieser zum Drehfortschritt in Relation gesetzt werden, und dadurch eine gezieltere Bewertung durchgeführt werden. Hier wurde besonders erkannt, dass bei einer Einzelblattverstellung eine zyklische Blattverstellung des jeweiligen Rotorblattes vorgenommen wird, wobei das mit der Drehung des Rotors gekoppelt ist. Daher kann auch eine zulässige Blattwinkelabweichung von der Rotorposition abhängen. Es wurde also erkannt, dass eine Blattwinkelabweichung je nach Stellung des Rotors hinsichtlich einer Fehlstellung unterschiedlich bewertet werden kann.

Das Verfahren soll für Windenergieanlagen angewendet werden, deren Rotorblätter in ihren Blattwinkeln individuell verstellbar sind. Es ist daher möglich, jedem Rotorblatt einen individuellen Blattwinkel vorzugeben. Dabei ist es ebenso möglich, dass sich der Blattwinkel mit der Zeit ändern soll, so dass jedem Rotorblatt der zeitliche Verlauf des Blattwinkels individuell vorgegeben wird. Die Blattwinkel der drei Rotorblätter, insbesondere der zeitliche Verlauf der Blattwinkel der drei Rotorblätter, unterscheiden sich daher voneinander.

Da sich die Blattwinkel zeitlich ändern können, wird das Erkennen einer Blattfehlstellung erschwert. Unter einer Blattfehlstellung wird insbesondere ein feststehendes Blatt verstanden, also ein Rotorblatt, dessen Blattwinkel sich nicht mehr verstellen lässt. Ebenso wird unter einer Blattfehlstellung verstanden, wenn der Blattwinkel eines Rotorblattes der Vorgabe nicht folgt. So zum Beispiel, wenn der tatsächliche Blattwinkel dem vorgegebenen Blattwinkel zeitlich verzögert folgt. Ebenso ist es möglich, dass der Blattwinkel zwar der Vorgabe entsprechend variiert, jedoch in seiner Amplitude nicht den eingestellten Wert erreicht. Ein weiteres Beispiel einer Blattfehlstellung kann das Verhalten eines Rotorblattes sein, dessen Blattwinkel kontinuierlich größer oder kleiner wird. Hier können die Amplituden etwaiger Abweichungen noch zulässig sein, das gesamte Verhalten aber nicht, weil z.B. ein zu langer Anstieg vorliegt, oder während des Drehfortschritts der Blattwinkel sich nicht wie erwartet verhält. All diese Blattfehlstellungen bei individuell verstellbaren Rotorblättern einer Windenergieanlage soll das Verfahren möglichst erkennen können.

Insbesondere sollen unzulässige Blattfehlstellungen erkannt werden. Nicht jede Blattwinkelabweichung führt automatisch zu einem Sicherheitsrisiko. Erst wenn ein kritischer Wert überschritten wird, oder eine kritische Situation erreicht wird, soll auf eine Blattfehlstellung erkannt werden.

Das Verfahren kann so durchgeführt werden, dass zunächst für jedes einzelne Rotorblatt ein Ist-Winkel als Ist-Wert des Blattwinkels erfasst wird. Dabei kann der Ist-Winkel gemessen werden, z.B. durch einen dafür geeigneten Sensor, oder auf andere Weise bestimmt werden. Der Ist-Winkel entspricht somit dem tatsächlich auftretenden Blattwinkel eines Rotorblattes.

Dabei entspricht der Blattwinkel eines Rotorblattes dem Neigungswinkel, bzw. Pitchwinkel des Rotorblattes. Der Blattwinkel beschreibt im Wesentlichen, um welchen Winkel das Rotorblatt gegen die Rotorfläche geneigt ist. Um das Rotorblatt aus dem Wind herauszudrehen wird also der Blattwinkel erhöht. Im umgekehrten Fall, um das Rotorblatt in den Wind zu drehen, wird der Blattwinkel verkleinert. Im Teillastbetrieb liegen die Blattwinkel typischerweise im Bereich von 0 bis 7°, können aber auch noch darüber liegen, und auch negativ werden.

Für jedes Rotorblatt wird zudem die Blattwinkelabweichung, nämlich die Abweichung des Ist-Winkels von einem Referenzwinkel, bestimmt. Der Referenzwinkel kann z.B. einem für alle Rotorblätter gleich vorgegebenem Blattwinkel entsprechen, der auch als kollektiver Blattwinkel bezeichnet wird. Der Referenzwinkel kann aber ebenso als Mittelwert der Ist-Winkel aller Rotorblätter gebildet werden. Ebenso kann der Referenzwinkel dem Ist-Winkel eines der übrigen Rotorblätter entsprechen. Dabei kann der Referenzwinkel so gewählt werden, dass die Blattwinkelabweichung maximal wird.

Außerdem wird ein Drehfortschritt des Rotors bestimmt. Insbesondere wird für jedes Rotorblatt individuell ein Drehfortschritt bestimmt. Dabei steht der Drehfortschritt repräsentativ für einen Winkel, den das Rotorblatt nach einem Startkriterium zurückgelegt hat. Der Drehfortschritt kann insbesondere ein Drehfortschrittswinkel sein oder als Drehfortschrittswinkel bezeichnet werden. Es wird also bestimmt, wieweit sich der Rotor mit dem jeweiligen Rotorblatt nach einem ausgelösten Startkriterium gedreht hat. Der Drehfortschritt kann somit insbesondere auch repräsentativ für eine von dem Rotorblatt überstrichene Rotorfläche stehen.

Der Rotor dreht sich natürlich für alle Rotorblätter gleich. Der Drehfortschritt kann sich aber zwischen den Rotorblättern durch individuelle Startkriterien unterscheiden. Er beginnt also zu unterschiedlichen Zeiten.

Das Startkriterium legt somit den Zeitpunkt fest, ab dem bestimmt wird, welchen Winkel das Rotorblatt überstrichen hat, um welchen Winkel sich der Rotor also weiter gedreht hat. Das Startkriterium kann beispielsweise über den zeitlichen Verlauf der Blattwinkel der Rotorblätter bestimmt werden. Beispielsweise kann das Startkriterium danach gewählt werden, wann der Ist-Winkel eines Rotorblattes maximal oder minimal gegenüber den Ist-Winkeln der anderen Rotorblätter wird. In anderen Worten wird das Startkriterium durch den Zeitpunkt bestimmt, an dem der zeitliche Verlauf des Blattwinkels eines Rotorblattes den zeitlichen Verlauf des Blattwinkels eines anderen Rotorblattes schneidet.

Beim Drehfortschritt können aufgrund von mitdrehenden, windinduzierten Lasten insbesondere auch volle Umdrehungen mitberücksichtigt werden, sodass auch Drehfortschrittswinkel größer 360° möglich sind. Der Drehfortschritt ist dabei aber nur selten wesentlich größer als 360°. Der Drehfortschritt des Rotorblattes wird zurückgesetzt, also genullt, sobald ein neues Startkriterium den Beginn einer erneuten Drehfortschrittsbestimmung festlegt.

Ein Kriterium für die Blattfehlstellung eines Rotorblattes wird in Abhängigkeit von der Blattwinkelabweichung des Rotorblattes und dem Drehfortschritt des Rotorblattes identifiziert. Insbesondere variiert ein Kriterium für die Blattwinkelabweichung, ab dem auf eine Blattfehlstellung erkannt wird, mit zunehmendem Drehfortschritt des Rotorblattes. Es wurde erkannt, dass ein Zusammenspiel zwischen Blattwinkelabweichung und Drehfortschritt berücksichtigt werden kann, um gut, insbesondere schnell und verlässlich, auf eine Blattfehlstellung erkennen zu können. Beispielsweise ist für den Fall, dass alle drei Rotorblätter feststehen und einen konstanten Ist-Winkel aufweisen, die Blattwinkelabweichung gering. Der Drehfortschritt steigt jedoch unaufhörlich weiter an, da kein Startkriterium durch das Schneiden der Verläufe der Blattwinkel ausgelöst wird. Auf eine Blattfehlstellung kann dann trotz geringer Blattwinkelabweichung aufgrund des immer weiter anwachsenden Drehfortschritts erkannt werden.

Ebenso ist es möglich, dass der Ist-Winkel eines Rotorblattes kontinuierlich steigt und die Blattwinkelabweichung stark anwächst, während sich der Drehfortschritt nur minimal erhöht. Auch in diesem Fall kann infolge der starken Blattwinkelabweichung auf eine Blattfehlstellung erkannt werden.

Gemäß einem Aspekt wird für jedes der Rotorblätter ein Soll-Winkel als Soll-Wert des Blattwinkels als zeitlicher, zyklischer, insbesondere oszillierender Verlauf vorgegeben. Hier ist besonders vorgesehen, dass die Vorgabe in Abhängigkeit von den auftretenden Windverhältnissen erfolgt, insbesondere von der Windrichtung, Windgeschwindigkeit und/oder einem Windgradienten, der eine Änderung der Windgeschwindigkeit und/oder der Windrichtung mit dem Ort, insbesondere der Höhe beschreibt. Durch diese zyklische Variation wird zyklischen Belastungsänderungen begegnet, die durch Änderungen der Windrichtung und der Windgeschwindigkeit über die Rotorfläche hervorgerufen sein können.

Die vorgegebenen zeitlichen Verläufe der Soll-Winkel sind dabei zueinander phasenverschoben. Es ist somit insbesondere möglich, jedem der Rotorblätter denselben Soll-Winkel-Verlauf vorzugeben, und einen zeitlichen Versatz der Soll-Winkel der Rotorblätter durch die Phasenverschiebung zu erreichen. Das berücksichtigt, dass mit Drehung des Rotors die Rotorblätter abhängig vom Ort in der Rotorfläche jeweils etwa die gleiche Belastung erfahren, aber zu unterschiedlichen Zeiten. Ein sinusförmiger Verlauf kann das oftmals gut abbilden und stellt dabei eine kontinuierliche Bewegung der Blattverstellung dar, die für den Verstellvorgang der Blätter eine geringe Belastung ist.

Hier wurde besonders erkannt, dass für eine zyklische Veränderung der Blattwinkel, sei sie sinusförmig oder anders, eine unzulässige Fehlstellung schwierig erkennbar ist und dafür wird eine Lösung angeboten.

Gemäß einem Aspekt wird für jedes Rotorblatt ständig, insbesondere in aufeinanderfolgenden diskreten Zeitschritten, bestimmt, ob sein Ist-Winkel ein extremer Winkel ist. Dabei weist das betreffende Rotorblatt einen extremen Winkel auf, wenn sein Ist-Winkel größer als die Ist-Winkel aller übrigen Rotorblätter ist, oder wenn sein Ist-Winkel kleiner als die Ist-Winkel aller übrigen Rotorblätter ist.

Zusätzlich oder alternativ wird für jedes Rotorblatt ständig, insbesondere in aufeinanderfolgenden diskreten Zeitschritten, bestimmt, ob sein Ist-Winkel ein nichtextremer Winkel ist. Dabei weist das betreffende Rotorblatt einen nichtextremen Winkel auf, wenn sein Ist-Winkel kleiner als ein Ist-Winkel wenigstens eines der übrigen Rotorblätter ist, und wenn sein Ist-Winkel größer als ein Ist-Winkel wenigstens eines der übrigen Rotorblätter ist.

Durch die Vorgabe eines oszillierenden Verlaufs der Soll-Winkel ändern sich ohne auftretende Blattfehlstellung, wenn also alles störungsfrei läuft, auch die Ist-Winkel der Rotorblätter kontinuierlich und sind etwa bekannt. Dabei schneiden sich die Verläufe der Soll-Winkel der Rotorblätter, und somit ohne Blattfehlstellung auch die Verläufe der Ist-Winkel der Rotorblätter, wiederkehrend zu einem bestimmbaren Zeitpunkt. Es weist somit immer ein Rotorblatt einen Ist-Winkel auf, der größer ist als die Ist-Winkel der beiden übrigen Rotorblätter und ein Rotorblatt weist einen Ist-Winkel auf, der kleiner ist als die Ist-Winkel der beiden übrigen Rotorblätter. Derartige Winkel, die entweder größer oder kleiner als die Ist-Winkel aller übrigen Rotorblätter sind, werden als extreme Winkel bezeichnet. Extreme Winkel, also ein maximaler und ein minimaler, können auch als einhüllende Winkel bezeichnet werden, da der Verlauf der extremen Winkel die Verläufe der übrigen Blattwinkel, bei drei Rotorblättern den Verlauf des übrigen Winkels, einhüllt.

Aufgrund der Vorgabe eines oszillierenden Verlaufes wechselt ohne Blattfehlstellung der Ist-Winkel ständig von einem extremen Winkel über zu einem nichtextremen Winkel, bei dem der Ist-Winkel weder kleiner noch größer als die Ist-Winkel aller übrigen Rotorblätter ist.

Es wurde erkannt, dass sich dieses Verhalten bei der Identifizierung einer Blattfehlstellung zunutze gemacht werden kann. Dazu wird eine Blattfehlstellung in Abhängigkeit davon identifiziert, ob der Ist-Winkel ein extremer Winkel oder ein nichtextremer Winkel ist.

Da die Soll-Winkel bekannt sind, ist auch der erwartete Verlauf der Ist-Winkel bei fehlender Blattfehlstellung bekannt. Sofern eine Blattfehlstellung jedoch auftritt, weichen die Verläufe der Ist-Winkel von den Verläufen der Soll-Winkel ab. Infolgedessen weist ein Rotorblatt dann auch einen extremen Winkel bzw. nichtextremen Winkel länger oder kürzer auf als erwartet. Insbesondere kann das Startkriterium für ein Rotorblatt in Abhängigkeit davon ausgelöst werden, ob der zugehörige Ist-Winkel ein extremer oder nichtextremer Winkel ist. Besonders der Übergang vom extremen Winkel zum nichtextremen Winkel, oder umgekehrt, kann ein Startkriterium sein. Dann kann nämlich in die Auswertung einfließen, wie lange jeweils ein extremer Winkel oder ein nichtextremer Winkel vorliegen.

Diese Eigenschaft ständig, insbesondere in aufeinanderfolgenden diskreten Zeitschritten, zu bestimmen liefert somit die Voraussetzung für die Auswertung. Darunter ist zu verstehen, dass diese Eigenschaften nicht sporadisch, sondern laufend aufgenommen werden. Das kann besonders auf die gleiche Art und Weise geschehen, besonders mit der gleichen Abtastung, die die Anlagensteuerung auch sonst verwendet, z.B. wie für die Blattwinkelverstellung und -ausregelung.

Gemäß einem Aspekt wird das Startkriterium für ein Rotorblatt durch einen Übergang seines Ist-Winkels von einem nichtextremen Winkel zu einem extremen Winkel gebildet oder ausgelöst.

Das Startkriterium kennzeichnet somit den Zeitpunkt, zu dem sich der Verlauf des Ist-Winkels eines Rotorblattes mit dem Verlauf des Ist-Winkels eines der anderen Rotorblätter schneidet. Das Überprüfen auf extremen und/oder nichtextremen Winkel ist dabei vorteilhaft, da nicht der genaue Verlauf aufgenommen werden muss, und der Schnittpunkt nicht exakt bestimmt werden muss, sondern nur der Zeitpunkt. Es reicht somit aus, festzustellen, wann ein Wechsel von einem nichtextremen zu einem extremen Winkel stattgefunden hat.

Es wurde weiterhin erkannt, dass es möglich ist, bei extremen Winkel zwischen einem minimalen Winkel, bzw. unterem einhüllenden Winkel, und einem maximalen Winkel, bzw. oberem einhüllenden Winkel, zu unterscheiden. Ein Startkriterium wird für ein Rotorblatt dann insbesondere durch einen Übergang seines Ist-Winkels von einem nichtextremen Winkel zu einem maximalen Winkel ausgelöst. Es wurde erkannt, dass vor allem bei gro-ßen Ist-Winkeln, also solchen bei denen das Blatt aus dem Wind gedreht wird, Blattfehlstellungen problematisch werden. Es ist daher ausreichend maximale Winkel zum Auslösen des Startkriteriums zu berücksichtigen.

Es wurde auch erkannt, dass eine Blattfehlstellung bei einem extremen Winkel wahrscheinlicher ist. Die extremen Winkel bilden einen eingehüllten Bereich, also eine Einhüllende, und die gibt auch gleichzeitig einen ungefähren Bereich vor, in dem sich die Winkel bewegen. Ein extremer Winkel liegt somit schon am Rande dieses eingehüllten Bereichs. Dazu wurde erkannt, dass neben den absoluten Werten der Blattwinkel wichtig ist, dass sie rechtzeitig wieder in diesen eingehüllten Bereich, zurückkehrt. Um das zu überwachen wird der genannte Schnittpunkt als Startkriterium verwendet.

Gemäß einem Aspekt beginnt mit dem Startkriterium ein Betrachtungszeitraum für das Rotorblatt. Der Betrachtungszeitraum endet, wenn für das Rotorblatt sein Ist-Winkel von einem extremen Winkel zu einem nichtextremen Winkel wechselt. Der Drehfortschritt wird als Winkel bestimmt, um den sich der Rotor nach dem Auslösen des Startkriteriums innerhalb des Betrachtungszeitraums gedreht hat.

Nach dem Startkriterium für ein Rotorblatt ist der Ist-Winkel des Rotorblattes ein extremer Winkel. Ohne Blattfehlstellung ist zu erwarten, dass der Verlauf des Blattwinkels nach einer bestimmbaren Zeit wiederum den Verlauf des Blattwinkels eines anderen Rotorblattes schneiden wird. Der Ist-Winkel des Rotorblattes wechselt dann von einem extremen Winkel zu einem nichtextremen Winkel. Diese Zeitspanne wird durch den Betrachtungszeitraum beschrieben. Der Betrachtungszeitraum entspricht somit der Zeitspanne, in der der Ist-Winkel des Rotorblattes ein extremer Winkel ist.

Der Betrachtungszeitraum ist dabei die Zeitspanne, in der der Drehfortschritt des Rotorblattes bestimmt wird. Sobald der Betrachtungszeitraum endet, wird der Drehfortschritt des Rotorblattes auf null zurückgesetzt. Bei einem erneuten Startkriterium wird dann der Drehfortschritt erneut für die Dauer des Betrachtungszeitraumes bestimmt.

Insbesondere wird der Drehfortschritt dadurch bestimmt, dass in vorgegebenen diskreten Zeitschritten eine Winkelposition des Rotorblattes bestimmt wird, eine Winkeländerung als Differenz der Winkelposition eines aktuellen Zeitschritts zu einer Winkelposition eines dem aktuellen Zeitschritt vorangehenden Zeitschritts bestimmt wird, und die Winkeländerung so lange aufsummiert wird, bis der Betrachtungszeitraum endet.

Bestimmt man zu diskreten Zeitschritten die Winkelposition des Rotors, lässt sich daraus eine Winkeländerung zwischen zwei Zeitschritten bestimmen, indem die Winkelposition des vorangegangenen Zeitschritts von der Winkelposition des aktuellen Zeitschritts abgezogen wird. Durch sukzessives Aufaddieren dieser Winkeländerungen lässt sich der Drehfortschritt bestimmen.

Alternativ lässt sich der Drehfortschritt bestimmen, indem zum Zeitpunkt des Startkriteriums sowie zu einem aktuellen Zeitpunkt, zu dem der Drehfortschritt überprüft werden soll, die Winkelposition bestimmt wird, und der Drehfortschritt bestimmt wird als Differenz zwischen Winkelposition zum aktuellen Zeitpunkt und zum Zeitpunkt des Startkriteriums. Um Drehfortschritte größer 360° erfassen zu können, kann es dabei notwendig sein, volle Umdrehungen zu erkennen und nach jeder vollen Umdrehung 360° zu der Differenz hinzuzuaddieren.

Alternativ zum Bestimmen extremer Winkel kann das Starkriterium für ein Rotorblatt gebildet oder ausgelöst werden, wenn der Ist-Winkel des Rotorblattes einen Winkelmittelwert als Mittelwert der Ist-Winkel aller Rotorblätter überschreitet. In diesem Fall endet der Betrachtungszeitraum, wenn der Ist-Winkel des Rotorblattes den Mittelwert aller Rotorblätter unterschreitet. Dies ist ähnlich zu der Berücksichtigung nur maximaler Winkel beim Auslösen des Startkriteriums. Nachteilhaft dabei ist, dass der Betrachtungszeitraum deutlich größer wird, sodass Fehler möglicherweise erst später erkannt werden.

Gemäß einem Aspekt wird für ein betrachtetes Rotorblatt, insbesondere ein Rotorblatt, dessen Ist-Winkel ein extremer Winkel ist, die Blattwinkelabweichung bestimmt als Differenz zwischen dem Ist-Winkel und dem Referenzwinkel.

Der Referenzwinkel wird insbesondere als Mittelwert der Ist-Winkel aller Rotorblätter gebildet und kann als Winkelmittelwert bezeichnet werden. Der Referenzwinkel ist somit abhängig von den Ist-Werten der Blattwinkel aller Rotorblätter und kann sich mit der Zeit ändern.

Alternativ wird der Referenzwinkel durch den Ist-Winkel eines der übrigen Rotorblätter gebildet, wobei insbesondere der Referenzwinkel so gewählt wird, dass die Blattwinkelabweichung maximal wird.

Dazu werden insbesondere Differenzen zwischen dem Ist-Winkel des betrachteten Rotorblattes und den Blattwinkeln aller übrigen Rotorblätter bestimmt, und davon der betragsmäßig größte gewählt, der auch als Differenzmaximum bezeichnet werden kann. Der Blattwinkel des Rotorblattes, der zum Differenzmaximum geführt hat, entspricht dann dem Referenzwinkel.

Bevorzugt ist, zu den bestimmten Differenzen, die absoluten Werte als absolute Differenzen zu bestimmen. Das Differenzmaximum entspricht in diesem Fall dem Maximum der absoluten Differenzen.

Alternativ wird die Blattwinkelabweichung als Differenz zwischen zwei extremen Winkeln gebildet. Der Referenzwinkel entspricht hierbei dem Ist-Winkel des Rotorblattes, das einen extremen Winkel aufweist aber nicht das betrachtete Rotorblatt ist. Dies entspricht im Ergebnis dem Verfahren, bei dem das Differenzmaximum gebildet wird. Es unterscheidet sich jedoch in der konkreten Umsetzung. Der Vorteil ist, dass nicht zwangsläufig die Differenz zwischen dem Ist-Winkel des betrachteten Rotorblattes und den Blattwinkeln aller übrigen Rotorblätter bestimmt werden muss. Es ist ausreichend, zu bestimmen, welches Rotorblatt ebenfalls einen extremen Winkel aufweist und dessen Ist-Winkel als Referenzwinkel zu wählen. Da ohnehin ständig geprüft wird, welches Rotorblatt einen extremen Winkel aufweist, kann der Referenzwinkel somit leicht bestimmt werden und die Rechenleistung vermindert werden.

Gemäß einem Aspekt wird zum Identifizieren einer Blattfehlstellung eine maximale Blattwinkelabweichung vorgegeben, die eine Blattwinkelabweichung bezeichnet, ab der auf eine Blattfehlstellung erkannt wird. Dabei wird die maximale Blattwinkelabweichung als Funktion des Drehfortschritts vorgegeben. Eine Blattfehlstellung wird identifiziert, wenn die Blattwinkelabweichung die maximale Blattwinkelabweichung überschreitet.

Der Ist-Winkel eines Rotorblattes, der oberhalb der maximalen Blattwinkelabweichung liegt, ist somit ein unzulässiger Blattwinkel. Bei solchen unzulässigen Blattwinkeln liegt eine ungewöhnliche und potentiell extremlasttreibende Betriebssituation vor und es wird ein Fehler ausgegeben, um weitere sicherheitsrelevante Maßnahmen zum Schutz der Windenergieanlage einzuleiten.

Insbesondere wird die maximale Blattwinkelabweichung in Abhängigkeit von dem Drehfortschritt vorgegeben, insbesondere abschnittsweise als Funktion des Drehfortschritts. Die maximale Blattwinkelabweichung variiert somit mit zunehmendem Drehfortschritt, insbesondere wird sie mit zunehmendem Drehfortschritt kleiner. Aufgrund der abschnittsweisen Funktion sind auch Sprünge der Blattwinkelabweichung zu höheren oder niedrigeren Werten möglich.

Somit werden mit zunehmendem Drehfortschritt immer geringere Blattwinkelabweichungen akzeptiert, bzw. es wird dabei bei immer geringeren Blattwinkelabweichungen eine Blattfehlstellung identifiziert.

Insbesondere weist jedoch die maximale Blattwinkelabweichung einen Wert von 10° oder weniger auf. Es gibt somit auch eine maximale Grenze die nicht überschritten werden darf. Dies betrifft den Fall, in dem der Referenzwinkel so gewählt wird, dass die Blattwinkelabweichung maximal wird. Entspricht der Referenzwinkel dem Winkelmittelwert, so ist die maximale Grenze der maximalen Blattwinkelabweichung bei etwa 5°.

Gemäß einem Aspekt wird vorgeschlagen, dass die maximale Blattwinkelabweichung als Funktion des Drehfortschritts durch eine Auswertung eines Verhaltens der Windenergieanlage erstellt wird, insbesondere durch eine Simulation. Dazu wird in der Auswertung ein Betrieb der Windenergieanlage mit variierenden Umgebungsparametern, insbesondere variierenden Windsituationen, simuliert oder im laufenden Betrieb beobachtet, und dabei Wertepaare der Blattwinkelabweichung und zugehörigem Drehfortschritt aufgenommen. Die maximale Blattwinkelabweichung wird dann in Abhängigkeit von den erfassten Wertepaaren bestimmt, wobei die maximale Blattwinkelabweichung so bestimmt wird, dass sie größere Werte aufweist als die Blattwinkelabweichung der Wertepaare desselben Drehfortschritts. Das kann auch so beschrieben werden, dass bei Darstellung der maximalen Blattwinkelabweichung und der Wertepaare in einem Diagramm die Wertepaare unter der maximalen Blattwinkelabweichung liegen.

Es wird also ein Modell der Windenergieanlage erstellt. Die maximale Blattwinkelabweichung wird in Abhängigkeit von dem Modell bestimmt, nämlich durch die Simulation, wobei verschiedene Betriebssituationen simuliert werden. Es kommen aber auch unterschiedliche Böigkeiten in Betracht. Für jede Betriebssituation wird die Blattwinkelabweichung und der Drehfortschritt der Rotorblätter bestimmt. Die maximale Blattwinkelabweichung wird in Abhängigkeit von den bestimmten Wertepaaren, also Blattwinkelabweichung-Drehfortschritts-Paaren bestimmt.

Die Abhängigkeit der Blattwinkelabweichung von dem Drehfortschritt ergibt sich somit aus der Anwendung des Modells, also aus der Simulation. Die verschiedenen Betriebssituationen umfassen verschiedene Wetterbedingungen bzw. Windbedingungen, wobei insbesondere verschiedene Windrichtungen, Windgeschwindigkeiten und/oder Windgradienten berücksichtigt werden. Es kommen aber auch unterschiedliche Böigkeiten in Betracht. Für jede dieser Situationen wird simuliert, wie sich die Anlage verhalten wird. Dabei wird sowohl der Drehfortschritt als auch die Blattwinkelabweichung aus der Simulation bestimmt. Alle Betriebssituationen, die zu einem fehlerfreien Ergebnis geführt haben, also insbesondere die Betriebssituationen, in denen die auftretenden Lasten zulässig sind, werden als gewöhnlich eingestuft. Die zugehörigen Blattwinkelabweichung-Drehfortschritts-Paare werden somit als zulässig definiert. Da in der Simulation keine Fehlstellung, wie ein klemmendes Blatt, auftreten, sind alle Ergebnisse der Simulation, also alle aufgenommenen Wertepaare zulässig und können als gewöhnlich eingestuft werden.

Entsprechend nicht auftretende Blattwinkelabweichung-Drehfortschritts-Paare, also Bereiche, in denen solche Wertepaare nicht aufgetreten sind, werden als ungewöhnlich und somit unzulässig eingestuft. Es ist aber alternativ möglich, auch selten auftretende Blattwinkelabweichung-Drehfortschritts-Paare auszuschließen. Dazu kann ein Histogramm der auftretenden Blattwinkelabweichung-Drehfortschritts-Paare erstellt und eine Schwelle festgelegt werden, ab der ein Blattwinkelabweichung-Drehfortschritts-Paar als oft genug und somit zulässig klassifiziert werden soll, und umgekehrt.

Die maximale Blattwinkelabweichung wird in Abhängigkeit von den als zulässig klassifizierten Blattwinkelabweichung-Drehfortschritts-Paaren bestimmt. Dazu wird an verschiedenen Stützstellen die Begrenzung der Fläche bekannter zulässiger Blattwinkelabweichung-Drehfortschritts-Paare bestimmt und eine Tabelle aus den Stützstellen erstellt. Die maximale Blattwinkelabweichung ergibt sich aus den Stützstellen der Tabelle oder durch Interpolation zwischen den Stützstellen.

Statt einer Simulation kann aber auch der laufende Betrieb ausgewertet werden. Hier wird davon ausgegangen, dass Fehler zunächst nicht auftreten. Besonders ein klemmendes Rotorblatt tritt eher bei längerem Betrieb auf, wobei dann vorher das Bestimmen der maximalen Blattwinkelabweichung abgeschlossen ist.

In jedem Fall wurde erkannt, dass durch die Aufnahme der gewöhnlichen Wertepaare ein fehlerfreier Bereich aufgenommen wurde. Der verbleibende Bereich, in dem gewöhnlich keine Betriebszustände, also Wertepaare auftreten, muss daher als nicht fehlerfreier Bereich angesehen werden. Die maximale Blattwinkelabweichung bildet somit eine Grenzkurve zwischen diesen Bereichen.

Gemäß einem Aspekt wird vorgeschlagen, dass die maximale Blattwinkelabweichung in einer Tabelle hinterlegt ist und/oder als stückweise Grenzkurve hinterlegt ist. Das kann besonders das Ergebnis sein, wenn die maximale Blattwinkelabweichung durch eine Simulation erstellt wird. Dadurch können beliebige Kurven hinterlegt werden, die an ein konkret untersuchtes Verhalten einer Windenergieanlage angepasst sind.

Gemäß einem Aspekt nimmt für wenigstens einen Abschnitt die maximale Blattwinkelabweichung mit zunehmendem Drehfortschritt ab.

Je größer der Drehfortschrittswinkel wird, desto wahrscheinlicher ist es, dass eine Blattfehlstellung auftritt. Im Idealfall würden die Ist-Winkel der Rotorblätter dem Sollwinkel folgen. Bei einem vorgegebenen Sinusverlauf folgt dabei, dass alle 120° ein Wechsel von extremen zu nichtextremen Winkel erfolgt. Es wird also in diesem Fall ein Drehfortschrittswinkel von 120° erwartet. Aufgrund von Turbulenzen und dadurch möglichen mitrotierenden, windinduzierten Lasten ist es jedoch möglich, dass auch Drehfortschritte größer als 120° werden und auch zulässig sind. Auch Drehfortschritte größer 360° können aufgrund mitdrehender, wind induzierter Lasten auftreten. Es ist somit, je nach Situation, möglich, dass auch im fehlerfreien Betrieb ein Wechsel von extremen zu nichtextremen Winkel erst nach einem Drehfortschritt von etwa 360° erfolgt, dass also ein zulässiger Drehfortschritt bis etwa 360° betragen kann. Hierzu sind zulässige Drehfortschritte, die also wesentlich größer als 360° werden, bevor ein Wechsel von extremen zu nichtextremen Winkel erfolgt, selten. Typischerweise liegen zulässige Drehfortschritte unter 360° oder nur einige Grad darüber. Die Wahrscheinlichkeit einer Blattfehlstellung steigt jedoch zunehmend, mit weiter wachsendem Drehfortschritt. Daher wird schon bei geringeren Blattwinkelabweichungen auf eine Blattfehlstellung erkannt, wenn der Drehfortschritt groß ist.

Insbesondere nimmt die maximale Blattwinkelabweichung für wenigstens einen Abschnitt hyperbelförmig oder linear ab. Es wurde erkannt, dass bei geringem Drehfortschritt noch hohe Blattwinkelabweichungen zulässig sind, jedoch bei steigendem Drehfortschritt schnell abnehmen. Auf der anderen Seite sind bei hohem Drehfortschritt nur noch geringe Blattwinkelabweichungen zulässig. Die zulässigen Blattwinkelabweichungen sinken jedoch mit weiter steigendem Drehfortschritt nur noch geringfügig.

Für gewöhnlich ist zu erwarten, dass die maximale Blattabweichung in Abhängigkeit von einem zunehmenden Drehwinkel hyperbelförmig abnimmt. Gemäß einem Aspekt wird vorgeschlagen, dass ein linearer Abschnitt gewählt wird. Der lineare Abschnitt kann durch wenigstens zwei Punkte beschrieben bzw. vorgegeben werden. Eine abschnittsweise lineare Abnahme kann dazu führen, dass zu manchen Drehfortschritten zu große Blattwinkelabweichungen nicht als zu groß erkannt werden. Bei weiter zunehmendem Drehfortschritt werden sie dann aber, also etwas später, als zu groß, und damit unzulässig erkannt. Das Vorgeben einer linearen Abnahme hat jedoch den Vorteil, dass das Verfahren leichter umsetzbar ist, und auch schneller angepasst werden kann, wenn neue zulässige Wertepaare für Blattwinkel und Drehfortschritt gefunden werden.

Gemäß einem Aspekt spannen die Blattwinkelabweichung und der Drehfortschritt eine Fläche auf, nämlich in einem Diagramm, in dem die Blattwinkelabweichung über dem Drehfortschritt aufgetragen ist, die von der maximalen Blattwinkelabweichung begrenzt wird. Eine Blattfehlstellung wird abhängig von der aufgespannten Fläche identifiziert, wobei eine Blattfehlstellung identifiziert wird, wenn das Paar aus Blattwinkelabweichung und Drehfortschritt die aufgespannte Fläche verlässt.

Vorteilhaft hieran ist, dass die Fläche, die von der maximalen Blattwinkeldifferenz begrenzt wird, leichter zu bestimmen ist, als die maximale Blattwinkeldifferenz selbst, denn die maximale Blattwinkeldifferenz, die eine Grenzkurve für die Fläche bildet, müsste nach Bestimmung der Fläche noch zusätzlich bestimmt werden. Auch hierzu können beispielsweise Simulationen verwendet werden, um die Fläche zu bestimmen.

Gemäß einem Aspekt wird die maximale Blattwinkelabweichung in Abhängigkeit von einem Betriebszustand der Windenergieanlage vorgegeben. Der Betriebszustand umfasst einen Teillastbetrieb, Volllastbetrieb oder Sturmbetrieb. Zusätzlich oder alternativ umfasst der Betriebszustand einen Startvorgang, Normalbetrieb, Stoppvorgang oder Notstoppvorgang der Windenergieanlage. Insbesondere wird die maximale Blattwinkelabweichung als Funktionsverlauf in Abhängigkeit von dem Drehfortschritt vorgegeben, wobei für unterschiedliche Betriebszustände unterschiedliche Funktionsverläufe vorgegeben werden. Insbesondere wird die maximale Blattwinkelabweichung als Funktionsverlauf in Abhängigkeit von dem Drehfortschritt vorgegeben. Zusätzlich werden für unterschiedliche Betriebszustände unterschiedliche Funktionsverläufe vorgegeben.

Es ist somit ebenfalls möglich, dass für verschiedene Betriebszustände unterschiedliche maximale Blattwinkelabweichungen vorgegeben werden, ab denen auf eine Blattfehlstellung erkannt wird. Dabei können diese maximalen Blattwinkelabweichungen unterschiedliche Abhängigkeiten vom Drehfortschritt aufweisen. Das hat den Vorteil, dass genauer differenziert werden kann, in welchen Situationen auf eine Blattfehlstellung erkannt werden soll.

Dabei wird unterschieden zwischen den Betriebszuständen Teillastbetrieb, Volllastbetrieb oder Sturmbetrieb. Im Volllastbetrieb ist ausreichend Wind vorhanden, sodass die Windenergieanlage mit Nennleistung arbeiten kann. Im Teillastbetrieb ist nicht genügend Wind vorhanden, um Nennleistung zu erreichen. Im Sturmbetrieb sind auftretende Windstärken so groß, dass die Leistung heruntergeregelt werden muss, um Schäden an der Anlage zu vermeiden. Es wurde erkannt, dass jeder dieser Betriebszustände unterschiedliche Abhängigkeiten der Blattwinkelabweichung von dem Drehfortschritt zulässt.

All diese maximalen Blattwinkelabweichungen, die, wie alle beschriebenen, maximalen Blattwinkelabweichungen, die veränderlich sind, als Grenzkurve bezeichnet werden können, können durch eine Auswertung eines Verhaltens der Windenergieanlage erstellt werden, insbesondere durch eine Simulation, wie zu vorstehenden Aspekten beschrieben wurde.

Alternativ oder ergänzend wird unterschieden zwischen den Betriebszuständen Startvorgang, Normalbetrieb, Stoppvorgang oder Notstoppvorgang. Es wurde ebenfalls erkannt, dass es vorteilhaft sein kann, zwischen Anlaufphase, Normalbetrieb und Abschalten zu unterscheiden.

Gemäß einem Aspekt wird ein Verlauf einer erwarteten Blattwinkelabweichung in Abhängigkeit vom Drehfortschritt als Erwartungsverlauf vorgegeben. Für den Erwartungsverlauf wird ein Toleranzbereich vorgegeben, in dem ein Verlauf einer erfassten Blattwinkelabweichung vom Erwartungsverlauf abweichen darf. Die Blattwinkelfehlstellung wird in Abhängigkeit davon identifiziert, ob der Verlauf der erfassten Blattwinkelabweichung den Toleranzbereich verlässt.

Der Erwartungsverlauf beschreibt somit den Verlauf der Abweichung des Blattwinkels vom Referenzwinkel für den Fall, dass keine Blattfehlstellungen erwartet werden. Dabei kann die Blattwinkelabweichung mit der Rotorposition variieren, denn sie ist das Ergebnis einer Einzelblattverstellung, die jedes Rotorblatt in seinem Blattwinkel einzeln und dynamisch mit der Drehung des Rotors anpasst. Entsprechend wird der Erwartungsverlauf in Abhängigkeit vom Drehfortschritt vorgegeben.

Aufgrund auftretender Windbedingungen, insbesondere der auftretenden Windrichtung und/oder Windgeschwindigkeit, weicht die erfasste, also tatsächliche Blattwinkelabweichung, die die Abweichung eines Ist-Winkels vom Referenzwinkel beschreibt, vom Erwartungsverlauf ab. Dabei ist jedoch nicht jede Abweichung unzulässig. Es wird somit der Toleranzbereich definiert und vorgegeben, der aufgrund der auftretenden Windbedingung zulässig ist. Erst solche erfassten Blattwinkelabweichungen, die den Toleranzbereich verlassen, werden als unzulässig erkannt, wodurch eine Blattfehlstellung identifiziert wird.

Der Erwartungsverlauf ist vorzugsweise als zyklischer Verlauf, insbesondere sinusförmiger Verlauf vorgesehen, und durch eine Periodenlänge und/oder Amplitude gekennzeichnet.

Bei einer zu Grunde liegenden Einzelblattverstellung wird jedes Rotorblatt in seinem Blattwinkel einzeln und dynamisch mit der Drehung des Rotors anpasst. Hier wird erwartet, dass sich das zyklisch mit der Drehung des Rotors wiederholt und das wird daher auch für die resultierende Blattabweichung angenommen. Ein Blattwinkel sollte daher nach einer Umdrehung des Rotors wieder dieselbe Blattwinkelabweichung aufweisen. Daher wird vorgeschlagen, auch die erwartete Blattwinkelabweichung entsprechend vorzugeben, und sie daher als zyklischen Verlauf als Funktion des Drehfortschritts, also in Abhängigkeit der Drehung des Rotors, vorzugeben. Ein besonders vorteilhafter Verlauf ist dabei ein sinusförmiger Verlauf. Zumindest wird ein zyklischer Verlauf gewählt, der sich durch seine Periodenlänge und/oder Amplitude beschreiben lässt.

Es ist dabei insbesondere auch möglich die Periodenlänge und/oder Amplitude der erkannten Blattwinkelabweichung zu bestimmen. Der zeitliche Verlauf der Ist-Winkel und somit die erkannte Blattwinkelabweichung kann von den erwarteten bzw. als erwartet vorgegebenen Werten und Verläufen abweichen. Je nach Wetterbedingung kann ein zeitlicher zyklischer Verlauf und/oder ein zyklischer Verlauf in Abhängigkeit vom Drehfortschritt dann unterschiedlich stark gestreckt oder gestaucht sein. Die Streckung und Stauchung ist dabei abhängig von der auftretenden Windbedingung, insbesondere Windstärke und Windrichtung. Der Toleranzbereich definiert dann den Bereich, in dem die ermittelte Periodenlänge und/oder Amplitude zulässig sind. Somit kann eine Abweichung vom Erwartungsverlauf auch über eine auftretende Streckung oder Stauchung bewertet werden.

Alternativ oder ergänzend gibt der Toleranzbereich in Abhängigkeit vom Drehfortschritt jeweils eine positive Abweichungsgrenze und eine negative Abweichungsgrenze vor, um die die erfasste Blattwinkelabweichung den Erwartungsverlauf über- bzw. unterschreiten darf.

Zu jedem Drehfortschritt wird der Blattwinkelabweichung somit eine konkrete obere und untere Abweichungsgrenze vorgegeben. Weicht die erfasste Blattwinkelabweichung bei entsprechendem Drehfortschritt weiter ab, wird eine Blattfehlstellung identifiziert. Die positive Abweichungsgrenze und die negative Abweichungsgrenze können unterschiedlich gewählt werden.

Es kann der Periodenlänge und/oder Amplitude ein Toleranzbereich vorgegeben werden, um darüber eine Abweichung zu bewerten. Darüber können die genannten Streckungen und/oder Stauchungen bewertet werden. Es können auch dem Erwartungsverlauf eine obere und untere Abweichungsgrenze vorgegeben werden, um darüber die Abweichung zu bewerten. Sind beide Varianten als Kriterien implementiert, wird eine Blattfehlstellung erkannt, wenn wenigstens ein Kriterium auf eine Blattfehlstellung schließen lässt.

Erfindungsgemäß wird ebenfalls eine Windenergieanlage mit einem Rotor und wenigstens drei in ihren Blattwinkeln individuell verstellbaren Rotorblättern vorgeschlagen, wobei die Windenergieanlage dazu vorbereitet ist, ein Verfahren zum Erkennen einer Blattfehlstellung nach einem der vorstehenden Aspekte/Ausführungsformen auszuführen, und die Windenergieanlage insbesondere eine Mess- und Steuereinrichtung aufweist, auf der das Verfahren zum Erkennen einer Blattfehlstellung implementiert ist.

Die Windenergieanlage ist somit dazu eingerichtet, eine Blattfehlstellung zu identifizieren und bei Erkennen auf eine Blattfehlstellung notwendige Steuerungsmaßnahmen einzuleiten. Insbesondere wird die Windenergieanlage bei identifizierter Blattfehlstellung abgeschaltet.

Die vorliegende Erfindung wird im Folgenden beispielhaft unter Bezugnahme auf die beigefügten Figuren näher erläutert, wobei gleiche Bezugszeichen für gleiche oder ähnliche Elementbaugruppen verwendet werden können.
- **Figur 1**: zeigt eine erfindungsgemäße Windkraftanlage in einer perspektivischen Ansicht,
- **Figur 2**: zeigt das erfindungsgemäße Verfahren zum Erkennen auf Blattfehlstellung,
- **Figur 3**: zeigt einen theoretischen Verlauf von Ist-Winkeln und Drehfortschritt,
- **Figur 4**: zeigt einen beispielhaften Verlauf einer maximalen Blattwinkelabweichung.
- **Figur 5**: zeigt ein weiteres erfindungsgemäßes Verfahren zum Erkennen auf Blattfehlstellung,

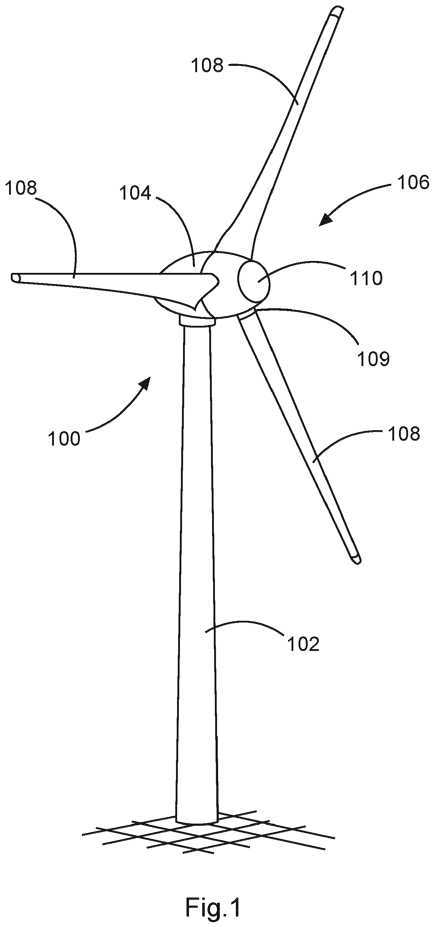

**Figur 1** zeigt eine erfindungsgemäße Windenergieanlage. Die Windenergieanlage 100 hat einen Turm 102 und eine Gondel 104. An der Gondel 104 ist ein Rotor 106 angeordnet, der drei individuell verstellbare Rotorblätter 108 und einen Spinner 110 aufweist. Im Betrieb wird der Rotor 106 durch den Wind in eine Drehbewegung versetzt und treibt dadurch einen elektrischen Generator in der Gondel 104 an.

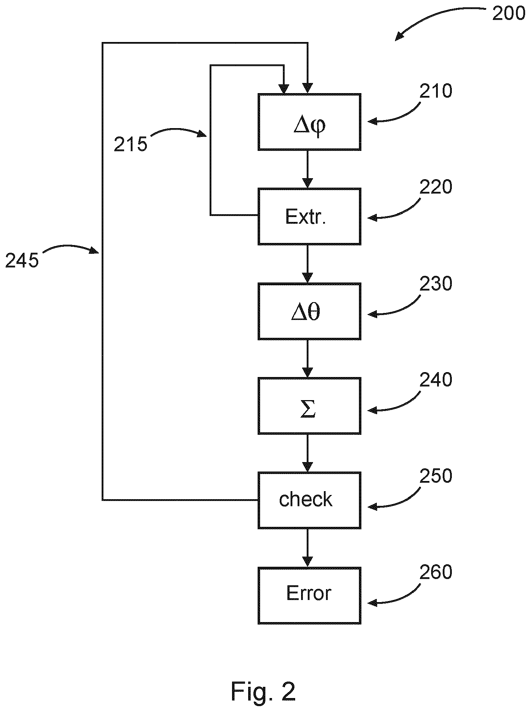

**Figur 2** zeigt ein Verfahren 200 zum Erkennen auf Blattfehlstellungen. In einem Winkelbestimmungsschritt 210 wird dabei zunächst der Winkel bestimmt, um den sich der Rotor zu einem vorangegangenen diskreten Zeitschritt weitergedreht hat. Dazu wird die Rotorposition bestimmt und davon die Rotorposition zu dem vorangehenden Zeitschritt abgezogen.

In einem Extremtestschritt 220 wird für jedes Blatt bestimmt, ob sein Ist-Winkel ein extremer Winkel ist. Wird für ein Rotorblatt festgestellt, dass es einen extremen Winkel aufweist, wird mit dem nächsten Schritt fortgefahren. Andernfalls wird der Drehfortschritt des Rotorblattes auf null zurückgesetzt und zum nächsten Zeitschritt erneut mit dem Winkelbestimmungsschritt 210 begonnen, was durch die innere Schleife 215 verdeutlicht wird.

Weist ein Rotorblatt hingegen einen extremen Winkel auf, wird mit einem Abweichungsbestimmungsschritt 230 weiterverfahren. Dabei soll die Blattwinkelabweichung zum Referenzwinkel bestimmt werden, indem die aktuelle maximale Blattwinkelabweichung dieses Rotorblatts zu den anderen Rotorblättern bestimmt wird. Dazu wird die Differenz zwischen dem Ist-Winkel des Rotorblattes und den Ist-Winkeln der übrigen Rotorblättern gebildet. Die betragsmäßig größere Differenz entspricht dann der aktuellen maximalen Blattwinkelabweichung.

Im Addierschritt 240 wird weiterhin der Winkel, der im Winkelbestimmungsschritt 210 bestimmt wurde zu dem Drehfortschritt des Rotorblattes hinzuaddiert. Auf diese Weise wird der Drehfortschritt sukzessive aufsummiert, solange, bis für das Rotorblatt im Extremtestschritt 220 festgestellt wird, dass es keinen extremen Winkel aufweist und der Drehfortschritt wieder genullt wird.

Im Vergleichsschritt 250 werden die aktuellen Werte des Ist-Winkels und des Drehfortschritts des Rotorblattes mit den maximalen Blattwinkelabweichungen verglichen. Dazu lässt sich in einer Tabelle überprüfen, ob der Ist-Winkel zu dem Drehfortschritt einen zulässigen Wert aufweist, oder einer Blattfehlstellung zugeordnet werden kann bzw. muss.

Wird das Paar aus Ist-Winkel und Drehfortschritt einer Blattfehlstellung zugeordnet, wird im Fehlerausgabeschritt 260 ein Fehler ausgegeben und die Windenergieanlage abgeschaltet.

Solange keine Blattfehlstellung identifiziert wird, beginnt das Verfahren zum nächsten Zeitschritt erneut mit dem Winkelbestimmungsschritt 210, was durch die äußere Schleife 245 verdeutlicht wird.

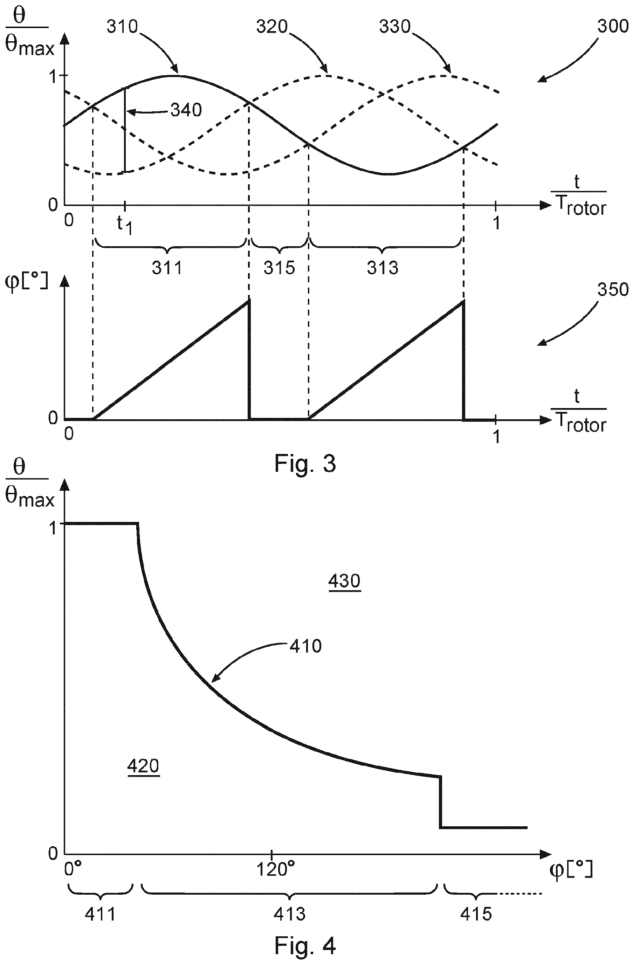

**Figur 3** zeigt das Verhalten eines Rotorblattes unter optimalen Bedingungen, also ohne Blattfehlstellung. Dazu sind zwei Koordinatensysteme gezeigt.

Im ersten Koordinatensystem 300 ist auf der Abszisse die Zeit t normiert auf die Dauer einer Rotorumdrehung Tᵣₒₜₒᵣ dargestellt. Auf der Ordinate ist der Blattwinkel des Rotorblattes θ in Grad normiert auf den maximal eingestellten Soll-Blattwinkel θₘₐₓ dargestellt.

Dargestellt ist der Verlauf der Ist-Winkel 310, also der Verlauf des Blattwinkels eines beispielhaft betrachteten ersten Rotorblattes. Der vorgegebene Soll-Winkel ist sinusförmig.

Unter optimalen Bedingungen ist somit auch der Verlauf der Ist-Winkel 310 des ersten Rotorblattes sinusförmig. Ebenso sind die Verläufe 320, 330 der Ist-Winkel der übrigen beiden Rotorblätter, die als zweites und drittes Rotorblatt bezeichnet werden können, gestrichelt dargestellt.

Die Bereiche 311, 313 entsprechen den Bereichen, in denen das erste Rotorblatt einen extremen Winkel aufweist. Hier ist der Ist-Winkel 310 des ersten Rotorblattes entweder größer als der Ist-Winkel 320, 330 der übrigen Rotorblätter (Bereich 311) oder der Ist-Winkel 310 des ersten Rotorblattes ist kleiner, als der Ist-Winkel 320, 330 der übrigen Rotorblätter (Bereich 313). Im Bereich 315 weist das erste Rotorblatt einen nichtextremen Winkel auf. Entsprechend sind durch die Bereiche 311, 313 jeweils ein Betrachtungszeitraum für das erste Rotorblatt dargestellt.

Zu einem bespielhaften Zeitpunkt t₁ ist die Blattwinkelabweichung 340 dargestellt. Sie gibt die maximale Blattwinkelabweichung zu den beiden übrigen Rotorblättern an. Die Blattwinkelabweichung 340 entspricht somit der Differenz zwischen zwei extremen Ist-Winkeln. In diesem Beispiel somit zwischen den Ist-Winkeln des ersten und zweiten Rotorblattes.

Das zweite Koordinatensystem 350 zeigt den Drehfortschritt ϕ auf der Ordinate von 0° bis 120°, also wie weit sich der Rotor gedreht hat. Auf der Abszisse ist die normierte Zeit für denselben Zeitbereich wie das erste Koordinatensystem 300 gezeigt. Dargestellt ist für das erste Rotorblatt der Verlauf des Drehfortschritts 360 unter optimalen Bedingungen. Innerhalb der Betrachtungszeiträume 311, 313 wird somit der Drehfortschritt sukzessive bestimmt. Sobald der Ist-Winkel 310 zu einem nichtextremen Winkel übergeht, endet der Betrachtungszeitraum und der Drehfortschritt 360 wird genullt.

Aufgrund des theoretischen sinusförmigen Verlaufs der Blattwinkel ist zu erwarten, dass ein Rotorblatt einen extremen Winkel für eine Rotation des Rotors um 120° behält. Zu berücksichtigen ist, dass dies jedoch nur theoretisch erwartbar ist. Vielmehr können auch Drehfortschritte größer 120° zulässig auftreten. Bspw. kann aufgrund von Turbulenzen vorkommen, dass sich der Rotor weiter als die theoretischen 120° dreht, bevor ein Rotorblatt mit extremem Winkel zu einem nichtextremen Winkel übergeht.

Eine Blattfehlstellung soll nun anhand des Ist-Winkels und des Drehfortschritts identifiziert werden. Bei der Identifizierung sind also immer beide Größen zu berücksichtigen.

**Figur 4** zeigt einen beispielhaften Verlauf einer maximalen Blattwinkelabweichung 410. Dargestellt ist ein Koordinatensystem, in dem Blattwinkelabweichung θ auf der Ordinate gegenüber dem Drehfortschritt ϕ auf der Abszisse aufgetragen ist. Die Blattwinkelabweichung θ ist normiert auf eine obere Blattwinkelabweichung θₘₐₓ, die unabhängig vom Drehfortschritt nicht überschritten werden darf und üblicherweise bei 10° liegt.

Die maximale Blattwinkelabweichung 410 ist abhängig von dem Drehfortschritt ϕ. Der Verlauf der maximalen Blattwinkelabweichung 410 ergibt sich aus Simulationen mit einem Modell der Windenergieanlage.

Durch die maximale Blattwinkelabweichung 410 wird das Koordinatensystem in zwei Bereiche aufgeteilt. Nämlich einen zulässigen Bereich 420 und einen unzulässigen Beriech 430. Es wird also eine Fläche 420 zulässiger Blattwinkelabweichung-Drehfortschritts-Paare aufgespannt, die durch die maximale Blattwinkelabweichung 410 begrenzt wird. Die maximale Blattwinkelabweichung 410 bildet somit eine Grenzkurve.

Der beispielhafte Verlauf der maximalen Blattwinkelabweichung 410 weist mehrere Abschnitte 411, 413, 415 auf. Der Abschnitt 411 bei kleinen Drehfortschrittswinkeln ist konstant. Hier erfolgt die Identifizierung einer Blattfehlstellung also noch unabhängig von dem Drehfortschritt. Der anschließende Bereich 413 bei weiter steigenden Drehfortschritten nimmt hyperbelförmig ab. Aber auch andere Verläufe wie etwa eine lineare Abnahme wären möglich. Optional kann auch ein Offset mitberücksichtigt werden, wie Abschnitt 415 zeigt. In dem Fall ist es zulässig, dass der Drehfortschritt kontinuierlich weiter wächst, solange die Blattwinkelabweichung unterhalb des vorgegebenen Offsets bleibt.

Solange ein Paar von Ist-Winkel und Drehfortschritt eines Rotorblattes innerhalb der so aufgespannten Fläche 420 liegt, wird nicht auf Blattfehlstellung erkannt. Verlässt ein Blattwinkelabweichung-Drehfortschritts-Paar jedoch den zulässigen Bereich und überschreitet die maximale Blattwinkelabweichung 410 wird auf Blattfehlstellung erkannt.

Andere Verläufe der maximalen Blattwinkelabweichung als der in Figur 4 dargestellte Verlauf sind möglich.

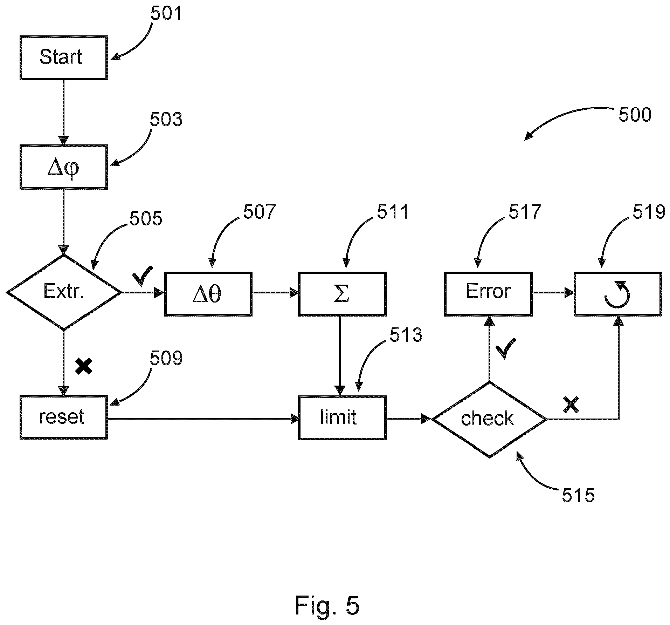

**Figur 5** veranschaulicht ebenfalls ein Verfahren 500 zum Erkennen auf Blattfehlstellungen. Zunächst wird in einem Rotorblattauswahlschritt 501 ein zu betrachtendes Rotorblatt ausgewählt. In einem Winkelbestimmungsschritt 503 wird der Winkel bestimmt, um den sich der Rotor zu dem vorangehenden Zeitschritt gedreht hat.

In einem Extremtestschritt 505 wird bestimmt, ob das Rotorblatt einen extremen Winkel aufweist. Sofern das Rotorblatt einen extremen Winkel aufweist, wird mit dem Abweichungsschritt 507 weiter verfahren. Falls das Rotorblatt einen nichtextremen Winkel aufweist, wird in einem Zurücksetzungsschritt 509 der Drehfortschritt des Rotorblattes und die Blattwinkelabweichung des Rotorblattes auf null zurückgesetzt.

Im Abweichungsschritt 507 wird die aktuelle Blattwinkelabweichung des Rotorblattes bestimmt. Dabei soll die Blattwinkelabweichung relativzum Referenzwinkel bestimmt werden, indem die aktuelle maximale Blattwinkelabweichung dieses Rotorblatts zu den anderen Rotorblättern bestimmt wird. Dazu wird die Differenz zwischen dem Ist-Winkel des Rotorblattes und den Ist-Winkeln der übrigen Rotorblättern gebildet. Die betragsmäßig größere Differenz entspricht dann der aktuellen maximalen Blattwinkelabweichung.

Anschließend an den Abweichungsschritt 507 wird in einem Addierschritt 511 der im Winkelbestimmungsschritt 503 bestimmte Winkel, um den sich der Rotor zum vorangegangenen Zeitschritt gedreht hat, zu dem Drehfortschritt des Rotorblattes hinzuaddiert. Der Drehfortschritt wird so sukzessive erhöht. Erst wenn zu einem späteren Zeitschritt dasselbe Rotorblatt im Rotorblattauswahlschritt 501 erneut ausgewählt, und im Extremtestschritt 505 ein nichtextremer Winkel festgestellt wurde, wird der Drehfortschritt des Rotorblattes im Zurücksetzungsschritt 509 zurückgesetzt.

Im Anschluss an den Addierschritt 511 sowie im Anschluss an den Zurücksetzungsschritt 509 wird in einem Grenzwertbestimmungsschritt 513 bestimmt, welcher momentane Grenzwert für die aktuelle Blattwinkelabweichung gilt. Dazu werden die aktuellen Werte für Drehfortschritt und Blattwinkelabweichung interpoliert und aus der bestimmten Grenzwerttabelle der aktuelle Grenzwert ausgelesen.

In einem anschließenden Vergleichsschritt 515 wird geprüft, ob die aktuelle Blattwinkelabweichung über dem geltenden Grenzwert liegt. Liegt es über dem im Grenzwertbestimmungsschritt 513 bestimmten geltenden Grenzwerte, wird in einem Fehlerausgabeschritt 517 ein Fehler ausgegeben und ein Notabschaltvorgang eingeleitet, um die Windenergieanlage abzuschalten.

In dem Grenzwertbestimmungsschritt 513 kann ergänzend auch ein Grenzwert für den Drehfortschritt bestimmt werden, dessen Einhaltung im Vergleichsschritt 515 überprüft werden kann.

In einem Finalschritt 519 wird der Vorgang nach der Notabschaltung beendet.

Wird hingegen im Vergleichsschritt 515 festgestellt, dass ein zulässiges Verhalten vorliegt, dass also die Blattwinkelabweichung nicht über dem geltenden Grenzwert liegt, wird in dem Abschlussschritt 519 ein nächstes Rotorblatt ausgewählt und für dieses Rotorblatt mit dem Rotorblattauswahlschritt 501 erneut mit dem Verfahren begonnen.

Erfindungsgemäß wurde besonders auch das Folgende erkannt und wird das Folgende vorgeschlagen.

Es wird ein Algorithmus zur Erkennung von ungewöhnlichen Blattwinkeldifferenzen sowie der Bestimmung zugehöriger Grenzwerte auf Grundlage von Erwartungswerten vorgeschlagen, die anhand von Mehrkörpersimulationen bestimmt wurden. Es lassen sich zwei Aspekte oder zwei Teile der Erfindung zumindest zum Zwecke der Erläuterung unterscheiden. Ein erster Teil bzw. Aspekt, betrifft die Bestimmung geeigneter Erwartungswerte sowie die Identifikation einer geeigneten Korrelation. Der erste Aspekt kann offline erfolgen. Der zweite Teil bzw. Aspekt, betrifft die Bestimmung von Momentanwerten und den Abgleich zu Grenzwerten. Der zweite Teil kann online und in Echtzeit erfolgen.

Der erste Teil bzw. Aspekt lässt sich in folgende wesentliche Punkte zusammenfassen. Aufgrund einer dominierenden Scherungswirkung wird zunächst angenommen, dass bei drei Rotorblättern mit Einzelblattverstellung somit die Ist-Winkel der Rotorblätter zu einem sinusförmigen Verlauf der Blattwinkel mit entsprechendem 120° Phasenversatz führen. Eine von drei unterschiedliche Anzahl an Rotorblättern würde entsprechend zu einem anderen Phasenversatz führen.

Es wird angenommen, dass lastkritische Situationen entstehen, sobald eine Blattwinkelabweichung besteht und durch das Rotorblatt, welches entweder am weitesten raus- oder reingepitcht ist, resultiert. Diese Rotorblätter werden auch als "Einhüllendes Blatt" oder Blatt mit extremem Winkel bezeichnet.

Aufgrund der Annahme des 120° Phasenversatzes ist ein Rotorblatt über eine Rotorumdrehung von 120° "einhüllend". Diese Eigenschaft der Einzelblattverstellung wird sich zunutze gemacht, um eine Erwartung zu bestimmen, nämlich über wie viele Rotorumdrehungen ein Rotorblatt einhüllend ist, also einen extremen Winkel aufweist.

Aufgrund von Turbulenz und dadurch mögliche "mitrotierende Lasten" können Einhüllende, also Rotorblätter mit extremen Winkeln, über Rotorumdrehungen größer als 120° zu erwarten sein.

Insgesamt besteht somit ein Zusammenhang aus erwarteten und unerwarteten ("verbotenen") aktuellen Blattwinkelabweichungen zu akkumulierten Rotorumdrehungen, die als Grenzwerte genutzt werden.

Die Erwartungen, also zu erwartenden Blattwinkelabweichungen, werden anhand von Simulationen in erforderlichen Betriebssituationen bestimmt, sodass die Sicherheitsfunktion in diesen Situationen nicht zu einem Anlagenstillstand führt.

Der zweite Teil bzw. Aspekt lässt sich in folgende wesentliche Punkte zusammenfassen.

Zunächst wird die Rotorumdrehung seit dem letzten Funktionsaufruf, bzw. letzten Zeitschritt, bestimmt. Also der Winkel, um den sich der Rotor zum letzten Zeitschritt gedreht hat, der auch als Rotorinkrement bezeichnet werden kann.

Für jedes Rotorblatt wird geprüft, ob es "einhüllend" ist, also einen extremen Winkel aufweist. Falls dies nicht der Fall ist, können folgende Schritte ignoriert werden.

Anschließend wird die aktuelle, maximale Blattwinkelabweichung dieses Rotorblatts zu den anderen Rotorblättern bestimmt und das Rotorinkrement auf den aktuellen, bereits akkumulierten Drehfortschritt aufsummiert.

Anhand dieser Momentanwerte können die momentanen Grenzwerte anhand der im ersten Teil bestimmten Tabelle bestimmt und abgeglichen werden.

Bei Überschreitung des Grenzwertes besteht eine ungewöhnliche und potentiell extremlasttreibende Betriebssituation vor, weshalb eine sichere Notfahrt durchgeführt wird.

## Patentansprüche

1. Verfahren zum Erkennen einer Blattfehlstellung eines Rotorblattes einer Windenergieanlage mit einem Rotor und wenigstens drei in ihren Blattwinkeln individuell verstellbaren Rotorblättern, wobei
- für jedes Rotorblatt ein Ist-Winkel als Ist-Wert des Blattwinkels erfasst wird, und
- die Blattfehlstellung in Abhängigkeit von
- einer Blattwinkelabweichung des Rotorblattes und
- einem Drehfortschritt des Rotors
identifiziert wird, wobei
- die Blattwinkelabweichung eine Abweichung des Ist-Winkels von einem Referenzwinkel beschreibt, und
- der Drehfortschritt repräsentativ für einen Winkel steht, um den sich der Rotor nach einem Startkriterium weitergedreht hat.

2. Verfahren nach Anspruch 1, **dadurch gekennzeichnet, dass**
- für jedes der Rotorblätter ein Soll-Winkel als Sollwert des Blattwinkels als zeitlicher, zyklischer, insbesondere oszillierender, Verlauf vorgegeben wird, und
- die vorgegebenen zeitlichen Verläufe der Soll-Winkel zueinander phasenverschoben sind, wobei
- die vorgegebenen zeitlichen Verläufe insbesondere sinusförmig sind.

3. Verfahren nach Anspruch 1 oder 2, **dadurch gekennzeichnet, dass**
- für jedes Rotorblatt ständig, insbesondere in aufeinanderfolgenden diskreten Zeitschritten, bestimmt wird,
- ob sein Ist-Winkel ein extremer Winkel ist, wobei das betreffende Rotorblatt einen extremen Winkel aufweist, wenn
- sein Ist-Winkel größer als die Ist-Winkel aller übrigen Rotorblätter ist, oder wenn
- sein Ist-Winkel kleiner als die Ist-Winkel aller übrigen Rotorblätter ist, und/oder
- für jedes Rotorblatt ständig, insbesondere in aufeinanderfolgenden diskreten Zeitschritten, bestimmt wird,
- ob sein Ist-Winkel ein nichtextremer Winkel ist, wobei das betreffende Rotorblatt einen nichtextremen Winkel aufweist, wenn
- sein Ist-Winkel kleiner als ein Ist-Winkel wenigstens eines der übrigen Rotorblätter ist, und wenn
- sein Ist-Winkel größer als ein Ist-Winkel wenigstens eines der übrigen Rotorblätter ist, und
- die Blattfehlstellung in Abhängigkeit davon identifiziert wird, ob der Ist-Winkel ein extremer Winkel ist, oder ein nichtextremer Winkel.

4. Verfahren nach einem der vorstehenden Ansprüche, **dadurch gekennzeichnet, dass**
- das Startkriterium für ein Rotorblatt durch einen Übergang seines Ist-Winkels von einem nichtextremen Winkel zu einem extremen Winkel gebildet oder ausgelöst wird.

5. Verfahren nach einem der vorstehenden Ansprüche, **dadurch gekennzeichnet, dass**
- mit dem Startkriterium ein Betrachtungszeitraum für das Rotorblatt beginnt und der Betrachtungszeitraum endet, wenn für das Rotorblatt sein Ist-Winkel von einem extremen Winkel zu einem nichtextremen Winkel wechselt, und
- der Drehfortschritt bestimmt wird als Winkel, um den sich der Rotor nach dem Auslösen des Startkriteriums innerhalb des Betrachtungszeitraums gedreht hat, wobei insbesondere
- der Drehfortschritt dadurch bestimmt wird, dass in vorgegebenen diskreten Zeitschritten eine Winkelposition des Rotors bestimmt wird, eine Winkeländerung als Differenz der Winkelposition eines aktuellen Zeitschritts zu einer Winkelposition eines dem aktuellen Zeitschritt vorangehenden Zeitschritts bestimmt wird, und die Winkeländerung so lange aufsummiert wird, bis der Betrachtungszeitraum endet.

6. Verfahren nach einem der vorstehenden Ansprüche, **dadurch gekennzeichnet, dass**
- für ein betrachtetes Rotorblatt, insbesondere ein Rotorblatt, dessen Ist-Winkel ein extremer Winkel ist, die Blattwinkelabweichung bestimmt wird als Differenz zwischen dem Ist-Winkel und dem Referenzwinkel, wobei insbesondere
- der Referenzwinkel als Mittelwert der Ist-Winkel aller Rotorblätter gebildet wird, oder
- der Referenzwinkel durch den Ist-Winkel eines der übrigen Rotorblätter gebildet wird, wobei insbesondere der Referenzwinkel so gewählt wird, dass die Blattwinkelabweichung maximal wird, wobei insbesondere
- Differenzen zwischen dem Ist-Winkel des betrachteten Rotorblattes und den Blattwinkeln aller übrigen Rotorblätter bestimmt werden,
- ein Differenzmaximum der bestimmten Differenzen bestimmt wird, und
- das Differenzmaximum die Blattwinkelabweichung für das betrachtete Rotorblatt bildet,
oder
- die Blattwinkelabweichung als Differenz zwischen zwei extremen Winkeln gebildet wird.

7. Verfahren nach einem der vorstehenden Ansprüche, **dadurch gekennzeichnet, dass**
- zum Identifizieren einer Blattfehlstellung eine maximale Blattwinkelabweichung vorgegebenen wird, die eine Blattwinkelabweichung bezeichnet, ab der auf eine Blattfehlstellung erkannt wird, und
- die maximale Blattwinkelabweichung als Funktion des Drehfortschritts vorgegeben wird, wobei insbesondere
- die maximale Blattwinkelabweichung in Abhängigkeit von dem Drehfortschritt vorgegeben wird, insbesondere abschnittsweise als Funktion des Drehfortschritts, und
- insbesondere die maximale Blattwinkelabweichung einen Wert von 10° oder weniger aufweist, und
- eine Blattfehlstellung identifiziert wird, wenn die Blattwinkelabweichung die maximale Blattwinkelabweichung überschreitet.

8. Verfahren nach einem der vorstehenden Ansprüche, **dadurch gekennzeichnet, dass**
- eine bzw. die maximale Blattwinkelabweichung als Funktion des Drehfortschritts durch eine Auswertung eines Verhaltens der Windenergieanlage erstellt wird, insbesondere durch eine Simulation, wobei
- in der Auswertung ein Betrieb der Windenergieanlage mit variierenden Umgebungsparametern, insbesondere variierenden Windsituationen simuliert oder im laufenden Betrieb beobachtet wird, und
- dabei Wertepaare der Blattwinkelabweichung und zugehörigem Drehfortschritt aufgenommen werden, und
- die maximale Blattwinkelabweichung in Abhängigkeit von den erfassten Wertepaaren bestimmt wird, wobei
- die maximale Blattwinkelabweichung so bestimmt wird,
- dass sie größere Werte aufweist als die Blattwinkelabweichung der Wertepaare desselben Drehfortschritts, und/oder
- dass bei Darstellung der maximalen Blattwinkelabweichung und der Wertepaare in einem Diagramm die Wertepaare unter der maximalen Blattwinkelabweichung liegen.

9. Verfahren nach einem der vorstehenden Ansprüche, **dadurch gekennzeichnet, dass** eine bzw. die maximale Blattwinkelabweichung
- in einer Tabelle hinterlegt ist und/oder
- als stückweise Grenzkurve hinterlegt ist.

10. Verfahren nach einem der vorstehenden Ansprüche, **dadurch gekennzeichnet, dass**
- für wenigstens einen Abschnitt die maximale Blattwinkelabweichung mit zunehmendem Drehfortschritt abnimmt, insbesondere hyperbelförmig oder linear abnimmt.

11. Verfahren nach einem der vorstehenden Ansprüche, **dadurch gekennzeichnet, dass**
- die Blattwinkelabweichung und der Drehfortschritt eine Fläche aufspannen, die von der maximalen Blattwinkelabweichung begrenzt wird, und
- eine Blattfehlstellung abhängig von der aufgespannten Fläche identifiziert wird, wobei
- eine Blattfehlstellung identifiziert wird, wenn das Paar aus Blattwinkelabweichung und Drehfortschritt die aufgespannte Fläche verlässt.

12. Verfahren nach einem der vorstehenden Ansprüche, **dadurch gekennzeichnet, dass**
- die maximale Blattwinkelabweichung in Abhängigkeit von einem Betriebszustand der Windenergieanlage vorgegeben wird, wobei
- der Betriebszustand
- einen Teillastbetrieb, Volllastbetrieb oder Sturmbetrieb, und/oder
- einen Startvorgang, Normalbetrieb, Stoppvorgang oder Notstoppvorgang der Windenergieanlage,
umfasst, und insbesondere
- die maximale Blattwinkelabweichung als Funktionsverlauf in Abhängigkeit von dem Drehfortschritt vorgegeben wird und für unterschiedliche Betriebszustände unterschiedliche Funktionsverläufe vorgegeben werden.

13. Verfahren nach einem der vorstehenden Ansprüche, **dadurch gekennzeichnet, dass**
- ein Verlauf einer erwarteten Blattwinkelabweichung in Abhängigkeit vom Drehfortschritt als Erwartungsverlauf vorgegeben wird,
- für den Erwartungsverlauf ein Toleranzbereich vorgegeben wird, in dem ein Verlauf einer erfassten Blattwinkelabweichung vom Erwartungsverlauf abweichen darf, und
- die Blattwinkelfehlstellung in Abhängigkeit davon identifiziert wird, ob der Verlauf der erfassten Blattwinkelabweichung den Toleranzbereich verlässt, wobei insbesondere vorgesehen ist, dass
- der Erwartungsverlauf als zyklischer Verlauf, insbesondere sinusförmiger Verlauf vorgesehen ist, und durch eine Periodenlänge und/oder Amplitude gekennzeichnet ist, und/oder
- der Toleranzbereich in Abhängigkeit vom Drehfortschritt jeweils eine positive Abweichungsgrenze und eine negative Abweichungsgrenze vorgibt, um die die erfasste Blattwinkelabweichung den Erwartungsverlauf über- bzw. unterschreiten darf.

14. Windenergieanlage mit einem Rotor und wenigstens drei in ihren Blattwinkeln individuell verstellbaren Rotorblättern, wobei
- die Windenergieanlage dazu vorbereitet ist, ein Verfahren zum Erkennen einer Blattfehlstellung nach einem der vorstehenden Ansprüche auszuführen, und
- die Windenergieanlage insbesondere eine Mess- und Steuereinrichtung aufweist, auf der das Verfahren zum Erkennen einer Blattfehlstellung implementiert ist.

## Claims

1. Method for identifying a blade malposition of a rotor blade of a wind power installation having one rotor and at least three rotor blades which in terms of the blade angles thereof are individually adjustable, wherein
- for each rotor blade an actual angle is detected as the actual value of the blade angle; and
- the blade malposition is identified as a function of
- a blade angle deviation of the rotor blade and
- a rotational progress of the rotor,
wherein
- the blade angle deviation describes a deviation of the actual angle from a reference angle; and
- the rotational progress is representative of an angle about which the rotor has rotated onward after a start criterion.

2. Method according to Claim 1, **characterized in that**
- for each of the rotor blades a target angle as a target value of the blade angle is predefined as a temporal, cyclical, in particular oscillating, profile; and
- the predefined temporal profiles of the target angles are phase-shifted in relation to one another, wherein
- the predefined temporal profiles are in particular sinusoidal.

3. Method according to Claim 1 or 2, **characterized in that**
- for each rotor blade it is continually determined, in particular in successive discrete temporal steps,
- whether the actual angle thereof is an extreme angle, wherein the respective rotor blade has an extreme angle when
- the actual angle thereof is larger than the actual angles of all other rotor blades, or when
- the actual angle thereof is smaller than the actual angles of all other rotor blades; and/or
- for each rotor blade it is continually determined, in particular in successive discrete temporal steps,
- whether the actual angle thereof is a non-extreme angle, wherein the respective rotor blade has a non-extreme angle when
- the actual angle thereof is smaller than an actual angle of at least one of the other rotor blades, and when
- the actual angle thereof is larger than an actual angle of at least one of the other rotor blades; and
- the blade malposition is identified as a function of whether the actual angle is an extreme angle or a non-extreme angle.

4. Method according to one of the preceding claims, **characterized in that**
- the start criterion for a rotor blade is formed or triggered by a transition of the actual angle thereof from a non-extreme angle to an extreme angle.

5. Method according to one of the preceding claims, **characterized in that**
- an observation period for the rotor blade begins with the start criterion, and the observation period ends when the rotor blade changes the actual angle thereof from an extreme angle to a non-extreme angle; and
- the rotational progress is determined as the angle by which the rotor has rotated after the triggering of the start criterion within the observation period, wherein in particular
- the rotational progress is determined **in that** an angular position of the rotor is determined in predefined discrete temporal steps, an angular variation is determined as the difference between the angular position of a current temporal step and an angular position of a temporal step preceding the current temporal step, and the angular variation is added until the observation period ends.

6. Method according to one of the preceding claims, **characterized in that**
- for an observed rotor blade, in particular a rotor blade of which the actual angle is an extreme angle, the blade angle deviation is determined as the difference between the actual angle and the reference angle, wherein in particular
- the reference angle is formed as the mean value of the actual angles of all rotor blades; or
- the reference angle is formed by the actual angle of one of the other rotor blades, wherein in particular the reference angle is chosen such that the blade angle deviation is maximized, wherein in particular
- differences between the actual angle of the observed rotor blade and the blade angles of all other rotor blades are determined;
- a difference maximum of the determined differences is determined; and
- the difference maximum forms the blade angle deviation for the observed rotor blade;
or
- the blade angle deviation is formed as the difference between two extreme angles.

7. Method according to one of the preceding claims, **characterized in that**
- for identifying a blade malposition a maximum blade angle deviation is predefined, the latter describing a blade angle deviation as from which a blade malposition is identified; and
- the maximum blade angle deviation is predefined as a function of the rotational progress, wherein in particular
- the maximum blade angle deviation is predefined as a function of the rotational progress, in particular in portions as a function of the rotational progress; and
- in particular the maximum blade angle deviation has a value of 10° or less; and
- a blade malfunction is identified when the blade angle deviation exceeds the maximum blade angle deviation.

8. Method according to one of the preceding claims, **characterized in that**
- a or the maximum blade angle deviation as a function of the rotational progress is established by evaluating a behaviour of the wind power installation, in particular by simulation, wherein
- in the evaluation an operation of the wind power installation with variable environmental parameters, in particular variable wind situations, is simulated or observed in the running operation; and
- pairs of values of the blade angle deviation and the associated rotational progress are recorded in the process; and
- the maximum blade angle deviation is determined as a function of the detected pairs of values, wherein
- the maximum blade angle deviation is determined such
- that said maximum blade angle deviation has higher values than the blade angle deviation of the pairs of values of the same rotational progress; and/or
- that in an illustration of the maximum blade angle deviation and of the pairs of values in a diagram, the pairs of values are below the maximum blade angle deviation.

9. Method according to one of the preceding claims, **characterized in that** a or the maximum blade angle deviation
- is stored in a table; and/or
- is stored as a partial limiting curve.

10. Method according to one of the preceding claims, **characterized in that**
- for at least one portion the maximum blade angle deviation decreases as the rotational progress increases, in particular decreases in a hyperbolic or linear manner.

11. Method according to one of the preceding claims, **characterized in that**
- the blade angle deviation and the rotational progress define an area which is delimited by the maximum blade angle deviation; and
- a blade malposition is identified as a function of the defined area, wherein
- a blade malposition is identified when the pair composed of the blade angle deviation and the rotational progress departs from the defined area.

12. Method according to one of the preceding claims, **characterized in that**
- the maximum blade angle deviation is predefined as a function of an operating state of the wind power installation, wherein
- the operating state comprises
- a partial-load operation, a full-load operation or a storm operation; and/or
- a start-up procedure, a normal operation, a stopping procedure, or an emergency stopping procedure of the wind power installation;
and in particular
- the maximum blade angle deviation as a functional profile is predefined as a function of the rotational progress and different functional profiles are predefined for different operating states.

13. Method according to one of the preceding claims, **characterized in that**
- a profile of an anticipated blade angle deviation as a function of the rotational progress is predefined as the anticipated profile;
- a tolerance range in which a profile of a detected blade angle deviation may deviate from the anticipated profile is predefined for the anticipated profile; and
- the blade angle malposition is identified as a function of whether the profile of the detected blade angle deviation departs from the tolerance range, wherein it is in particular provided that
- the anticipated profile is provided as a cyclical profile, in particular sinusoidal profile, and is **characterized by** a period length and/or amplitude; and/or
- the tolerance range as a function of the rotational progress predefines in each case a positive critical deviation and a negative critical deviation by which the detected blade angle deviation may exceed or undershoot the anticipated profile.

14. Wind power installation having one rotor and at least three rotor blades which in terms of the blade angles thereof are individually adjustable, wherein
- the wind power installation is prepared to carry out a method for identifying a blade malposition according to one of the preceding claims; and
- the wind power installation has in particular a measurement and control installation on which the method for identifying a blade malposition is implemented.

## Revendications

1. Procédé pour repérer une mauvaise position de pale d'une pale de rotor d'une éolienne avec un rotor et au moins trois pales de rotor réglables individuellement dans leurs angles de pale, dans lequel
- pour chaque pale de rotor un angle réel est acquis en tant que valeur réelle de l'angle de pale, et
- la mauvaise position de pale est identifiée en fonction
- d'un écart d'angle de pale de la pale de rotor et
- d'une progression de rotation du rotor,
dans lequel
- l'écart d'angle de pale décrit un écart de l'angle réel par rapport à un angle de référence, et
- la progression de rotation est représentative d'un angle autour duquel le rotor a continué de tourner après un critère de démarrage.

2. Procédé selon la revendication 1, **caractérisé en ce que**
- pour chacune des pales de rotor un angle théorique en tant que valeur théorique de l'angle de pale est prédéfini en tant que variation temporelle, cyclique, en particulier oscillante, et
- les variations temporelles prédéfinies des angles théoriques sont en décalage de phase les unes par rapport aux autres, dans lequel
- les variations temporelles prédéfinies sont en particulier sinusoïdales.

3. Procédé selon la revendication 1 ou 2, **caractérisé en ce que**
- pour chaque pale de rotor il est déterminé en permanence, en particulier par intervalles de temps discrets successifs,
- si son angle réel est un angle extrême, dans lequel la pale de rotor concernée présente un angle extrême, lorsque
- son angle réel est supérieur à l'angle réel de toutes les pales de rotor restantes, ou lorsque
- son angle réel est inférieur à l'angle réel de toutes les pales de rotor restantes, et/ou
- pour chaque pale de rotor il est déterminé en permanence, en particulier par intervalles de temps discrets successifs,
- si son angle réel est un angle non extrême, dans lequel la pale de rotor concernée présente un angle non extrême, lorsque
- son angle réel est inférieur à un angle réel d'au moins d'une des pales de rotor restantes, et lorsque
- son angle réel est supérieur à un angle réel d'au moins d'une des pales de rotor restantes, et
- la mauvaise position de pale est identifiée selon que l'angle réel est un angle extrême, ou un angle non extrême.

4. Procédé selon l'une quelconque des revendications précédentes, **caractérisé en ce que**
- le critère de démarrage pour une pale de rotor est formé ou déclenché par un passage de son angle réel à partir d'un angle non extrême vers un angle extrême.

5. Procédé selon l'une quelconque des revendications précédentes, **caractérisé en ce que**
- avec le critère de démarrage une période d'examen pour la pale de rotor commence et la période d'examen prend fin lorsque, pour la pale de rotor, son angle réel bascule d'un angle extrême vers un angle non extrême, et
- la progression de rotation est déterminée en tant qu'angle autour duquel le rotor a tourné après le déclenchement du critère de démarrage pendant la période d'examen, dans lequel en particulier
- la progression de rotation est déterminée par le fait qu'une position angulaire du rotor est déterminée par intervalles de temps discrets prédéfinis, une modification angulaire est déterminée en tant que différence de la position angulaire d'un intervalle de temps actuel par rapport à une position angulaire d'un intervalle de temps précédant l'intervalle actuel, et la modification angulaire est totalisée jusqu'à ce que la période d'examen prenne fin.

6. Procédé selon l'une quelconque des revendications précédentes, **caractérisé en ce que**
- pour une pale de rotor observée, en particulier une pale de rotor dont l'angle réel est un angle extrême, l'écart d'angle de pale est déterminé en tant que différence entre l'angle réel et l'angle de référence, dans lequel en particulier
- l'angle de référence est formé en tant que valeur moyenne des angles réels de toutes les pales de rotor, ou
- l'angle de référence est formé par l'angle réel d'une des pales de rotor restantes, dans lequel en particulier l'angle de référence est choisi de sorte que l'écart d'angle de pale devient maximal, dans lequel en particulier
- les différences entre l'angle réel de la pale de rotor observée et les angles de pale de toutes les pales de rotor restantes sont déterminées,
- un maximum de différence des différences déterminées est déterminé, et
- le maximum de différence forme l'écart d'angle de pale pour la pale de rotor observée,
ou
- l'écart d'angle de pale est formé en tant que différence entre deux angles extrêmes.

7. Procédé selon l'une quelconque des revendications précédentes, **caractérisé en ce que**
- pour identifier une mauvaise position de pale, un écart d'angle de pale maximal est prédéfini, qui indique un écart d'angle de pale à partir duquel une mauvaise position de pale est repérée, et
- l'écart d'angle de pale maximal est prédéfini en fonction de la progression de rotation, dans lequel en particulier
- l'écart d'angle de pale maximal est prédéfini en fonction de la progression de rotation, en particulier sur certaines parties en fonction de la progression de rotation, et
- en particulier l'écart d'angle de pale maximal présente une valeur inférieure ou égale à 10°, et
- une mauvaise position de pale est identifiée lorsque l'écart d'angle de pale dépasse l'écart d'angle de pale maximal.

8. Procédé selon l'une quelconque des revendications précédentes, **caractérisé en ce que**
- un ou l'écart d'angle de pale maximal est établi en fonction de la progression de rotation par une évaluation d'un comportement de l'éolienne, en particulier par une simulation, dans lequel
- dans l'évaluation, un fonctionnement de l'éolienne avec des paramètres environnementaux variables, en particulier des situations venteuses variables, est simulé ou observé en cours de fonctionnement, et
- des paires de valeurs de l'écart d'angle de pale et la progression de rotation associée sont enregistrées à cette occasion, et
- l'écart d'angle de pale maximal est déterminé en fonction des paires de valeurs acquises, dans lequel
- l'écart d'angle de pale maximal est déterminé de sorte
- qu'il présente des valeurs plus grandes que l'écart d'angle de pale des paires de valeurs de la même progression de rotation, et/ou
- que, lors de la représentation de l'écart d'angle de pale maximal et des paires de valeurs dans un diagramme, les paires de valeurs se situent sous l'écart d'angle de pale maximal.

9. Procédé selon l'une quelconque des revendications précédentes, **caractérisé en ce qu'**un ou l'écart d'angle de pale maximal
- est enregistré dans un tableau et/ou
- est enregistré en tant que courbe limite graduelle.

10. Procédé selon l'une quelconque des revendications précédentes, **caractérisé en ce que**
- pour au moins une partie, l'écart d'angle de pale maximal diminue à mesure que la progression de rotation augmente, en particulier diminue en forme d'hyperbole ou de manière linéaire.

11. Procédé selon l'une quelconque des revendications précédentes, **caractérisé en ce que**
- l'écart d'angle de pale et la progression de rotation sous-tendent une surface, qui est délimitée par l'écart d'angle de pale maximal, et
- une mauvaise position de pale est identifiée en fonction de la surface sous-tendue, dans lequel
- une mauvaise position de pale est identifiée lorsque la paire composée de l'écart d'angle de pale et de la progression de rotation quitte la surface sous-tendue.

12. Procédé selon l'une quelconque des revendications précédentes, **caractérisé en ce que**
- l'écart d'angle de pale maximal est prédéfini en fonction d'un état de fonctionnement de l'éolienne, dans lequel
- l'état de fonctionnement comprend
- un fonctionnement en charge partielle, fonctionnement à pleine charge ou fonctionnement en cas de tempête, et/ou
- un processus de démarrage, fonctionnement normal, processus d'arrêt ou processus d'arrêt d'urgence de l'éolienne,
et en particulier
- l'écart d'angle de pale maximal est prédéfini en tant que variation fonctionnelle en fonction de la progression de rotation et différentes variations fonctionnelles sont prédéfinies pour différents états de fonctionnement.

13. Procédé selon l'une quelconque des revendications précédentes, **caractérisé en ce que**
- une variation d'un écart d'angle de pale attendu est prédéfinie en fonction de la progression de rotation en tant que variation attendue,
- pour la variation attendue, une plage de tolérance est prédéfinie, dans laquelle une variation d'un écart d'angle de pale acquis peut s'écarter de la variation attendue, et
- la mauvaise position d'angle de pale est identifiée selon que la variation de l'écart d'angle de pale acquis quitte la plage de tolérance, dans lequel en particulier il est prévu que
- la variation attendue soit prévue en tant que variation cyclique, en particulier variation sinusoïdale, et soit **caractérisée par** une longueur de période et/ou amplitude, et/ou
- la plage de tolérance prédéfinit, en fonction de la progression de rotation, respectivement une limite d'écart positive et une limite d'écart négative selon laquelle l'écart d'angle de pale acquis peut dépasser ou ne pas atteindre la variation attendue.

14. Eolienne avec un rotor et au moins trois pales de rotor réglables individuellement dans leurs angles de pale, dans lequel
- l'éolienne est destinée à exécuter un procédé pour repérer une mauvaise position de pale selon l'une quelconque des revendications précédentes, et
- l'éolienne présente en particulier un dispositif de mesure et de commande sur lequel le procédé pour repérer une mauvaise position de pale est implémenté.
